Europäisches Patentamt

European Patent Office

Office européen des brevets

(11) Veröffentlichungsnummer: **0 374 293**

**A1**

(12) **EUROPÄISCHE PATENTANMELDUNG**

(21) Anmeldenummer: **88121519.8**

(22) Anmeldetag: **22.12.88**

(51) Int. Cl.5: **G05B 19/05**

(43) Veröffentlichungstag der Anmeldung:
**27.06.90 Patentblatt 90/26**

(84) Benannte Vertragsstaaten:
**AT BE CH DE ES FR GB IT LI LU NL SE**

(71) Anmelder: **Siemens Aktiengesellschaft**
**Wittelsbacherplatz 2**
**D-8000 München 2(DE)**

(72) Erfinder: **Rumold, Gerhard, Dipl.-Ing. (FH)**
**Lukasstrasse 5**
**D-8526 Bubenreuth(DE)**

(54) **Ausgabeschaltungsanordnung.**

(57) Bei einer Ausgabeschaltung mit Controller und intelligenten Ausgabestufen erfolgt die Stromversorgung der Ausgabestufen jeweils aus separaten, galvanisch voneinander getrennten Spannungsquellen (W1 bis Wn) und die Betätigungsbefehle vom Controller für die Halbleiterschalter und die Rückmeldesignale zum Controller werden jeweils über Optokoppler zu- bzw. abgeführt. Jede Ausgabestufe erhält eine potentialgetrennte eigene Gleichstromversorgung, welche als Chopper-Stromversorgung realisiert ist. Die Übertragung der Rückmeldesignale erfolgt seriell mit dem Takt der Chopper-Stromversorgung. Damit lassen sich rückwirkungsfrei Betätigungsbefehle ausgeben, Schalthandlungen im Prozeß ausführen und den Laststromkreis betreffende Diagnosesignale aufwandsarm rückmelden.

FIG 1

EP 0 374 293 A1

Xerox Copy Centre

## Ausgabeschaltungsanordnung

Die vorliegende Erfindung bezieht sich auf eine Ausgabeschaltungsanordnung, bestehend aus einzelnen Ausgabestufen, welche von einem Controller betätigbare Leistungs-Halbleiterschalter enthalten sowie mit Einrichtungen zur Rückmeldung von Diagnosesignalen zum Controller versehen sind. Ein Ausgabesystem mit solchen "intelligenten" Ausgabestufen ist gemäß der DE-OS 35 19 826 bekannt und wird zur Betätigung der Stellglieder in industriellen Prozessen und Anlagen eingesetzt. Unter Controller wird dabei eine Einrichtung verstanden, die eine Zentraleinheit (CPU) enthält, welche aus einem Datenprozessor zum Ausführen eines gespeicherten Betätigungsablaufs, einer Speichereinheit zum Speichern dieses Ablaufs und der sich auf den Status der Eingänge und Ausgänge beziehenden Daten und einer Stromversorgung aufgebaut ist.

Bei der Steuerung eines Prozesses sind oft Stellglieder zu betätigen, welche sich hinsichtlich der Art und der Größe ihrer Betriebsspannungen nicht nur von der des sie betätigenden Systems sondern auch untereinander erheblich unterscheiden. Die Erfindung stellt sich die Aufgabe, bei einem Ausgabesystem der eingangs genannten Art in aufwandsarmer Weise für ein absolut potentialgetrenntes Schalten der Stellglieder zu sorgen, so daß weder durch die Schalthandlung selbst, noch durch ihre Einleitung, noch durch die Rückmeldung der Diagnosesignale zum Controller irgendwelche Potentialbeeinflussungen zwischen Steuerungssystem und Prozeß sowie zwischen den einzelnen Stellgliedern selbst entstehen können. Gelöst wird diese Aufgabe erfindungsgemäß durch die im Kennzeichen des Hauptanspruchs angegebenen Merkmale. Mit der erfindungsgemäß ausgebildeten Ausgabeschaltungsanordnung lassen sich Stellglieder in beliebigen Stromkreisen rückwirkungsfrei betätigen.

Die Erfindung samt ihren weiteren Ausgestaltungen, welche in Unteransprüchen gekennzeichnet sind, soll nachstehend anhand der Figuren näher erläutert werden. Dabei zeigen

Figur 1 ein Übersichtsbild zu der erfindungsgemäßen Ausgabeschaltungsanordnung in ihrer Verbindung mit einem Controller und dem Prozeß,

Figur 2 Einzelheiten zum internen Aufbau einer einzelnen Ausgabestufe,

Figur 3 eine vorteilhaft einfache Ausführung eines in einer Ausgabestufe verwendeten Parallel-Serienwandlers und

Figur 4 ein Impulsdiagramme zur seriellen Übertragung der Diagnosesignale zum Controller.

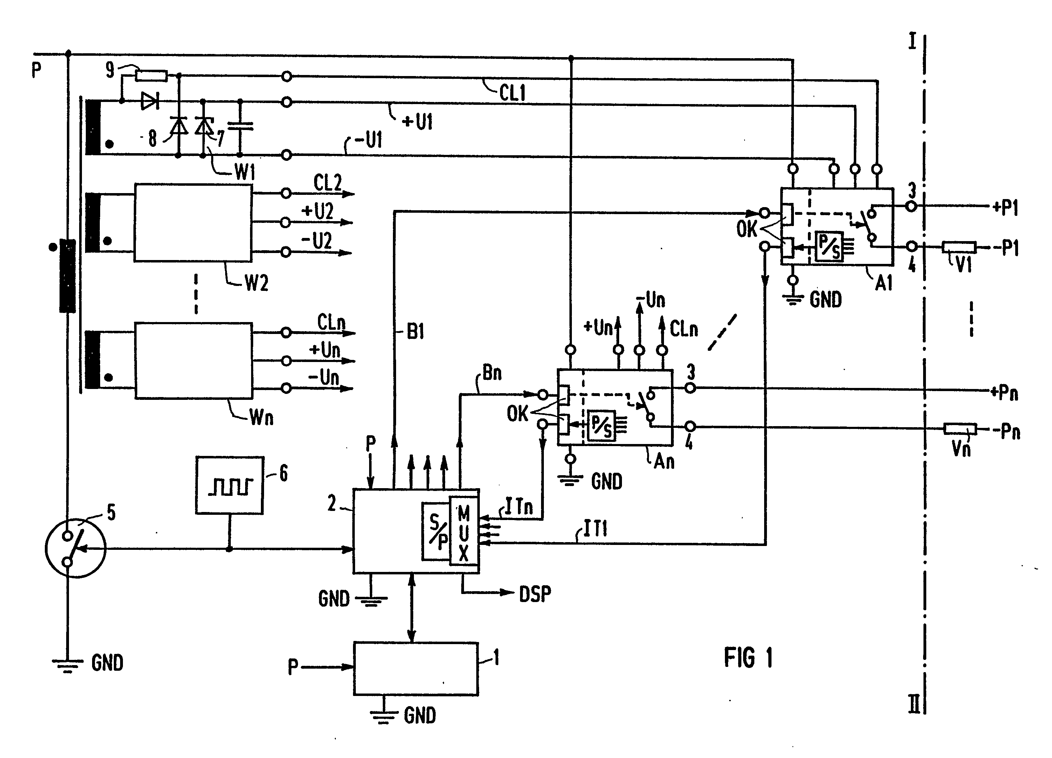

Das Übersichtsbild der Figur 1 bezieht sich auf n Ausgabestufen, von denen nur die Ausgabestufe A1 und die Ausgabestufe An blockschaltbildlich dargestellt sind. Sie befinden sich innerhalb eines einen Mikrocomputer 1 und einen Ausgabecontroller 2 enthaltenden Steuerungssystems, welches links der in Figur 1 mit I-II strichpunktiert dargestellten Linie dargestellt ist. Die Ausgangsklemmen 3, 4 der einzelnen Ausgabestufen A1 bis An sind jeweils durch Leistungs-Halbleiterschalter überbrückbar und gestatten somit, Prozeßstellglieder V1 - Vn, wie z.B. Magnetspulen, Motoren, Schütze, elektrohydraulische Ventile od.dgl., an mit +P1 bis +Pn bezeichnete Spannungspotentiale zu schalten und sie damit zu aktivieren. Die Halbleiterschalter der einzelnen Ausgabestufen werden von den Befehlen B1 bis Bn betätigt, welche von dem Ausgabecontroller 2 nach Maßgabe des in dem Mikrocomputer 1 gespeicherten Programms über Optokoppler OK den Ausgabestufen zugeführt werden. In den einzelnen Ausgabestufen werden Diagnosesignale erarbeitet, welche Aufschluß über den Zustand des geschalteten Ausgangsstromkreises bzw. des Leistungs-Halbleiterschalters geben und über einen mit P/S bezeichneten Parallel-Serienwandler und einen weiteren Optokoppler OK dem Ausgabecontroller 2 rückgemeldet werden. Diese seriell in Form von Impulstelegrammen IT1 bis ITn übertragenen Diagnosesignalen gelangen auf die Eingänge eines im Ausgabecontroller befindlichen Multiplexers MUX, welcher sie in an sich üblicher Weise an einen Serien-Parallelwandler weitergibt, so daß sie dann im Ausgabecontroller 2, bzw. dem Mikrocomputer 1 mehrbitbreit verarbeitet werden können. Die serielle Übermittlung der Diagnoseinformationen hat den Vorteil, daß für eine beliebige Anzahl von Diagnosesignalen pro Ausgabestufe nur ein einziger Optokoppler erforderlich ist, so daß der Aufwand für die relativ teuren Optokoppeleinrichtungen minimiert wird.

Für die Ausgabestufen A1 bis An ist eine Chopper-Stromversorgung mit zur Potentialtrennung jeweils separaten Gleichspannungswandlern W1 bis Wn - im dargestellten Beispiel Sperrwandler -vorgesehen, deren Sekundärwicklungen, auf einem gemeinsamen Kern gewickelt, eine gemeinsame Primärwicklung besitzen, welche in Reihe mit einem Halbleiterschalter 5 zwischen dem mit P bezeichneten System-Betriebspotential (z.B. + 5 V) und dem System-Bezugspotential GND (Masse) angeordnet ist. Der Schalter 5 wird von einem Taktgenerator 6, beispielsweise mit einer Frequenz von 20 kHz betätigt, sodaß in an sich bekannter Weise das Betriebsspannunspotential in hiervon potentialgetrennte Gleichspannungspotentiale $+U_1$, $-U_1$ bis $+U_n$, $-U_n$ umgewandelt werden. Zur Sicherung einer konstanten Spannungsversorgung kann es, wie dargestellt, genügen, die Ausgänge der einzelnen Gleichstromwandler W1 bis Wn jeweils mittels einer Zenerdiode 7 zu begrenzen. Für erhöhte Ansprüche wird man, wie an sich bekannt, eine besondere Spannungsregelung einsetzen. Bei entsprechenden räumlichen Gegebenheiten kann es sich auch als zweckmäßig erweisen, statt eines gemeinsamen Kernes und einer gemeinsamen Primärwicklung bei den Gleichstromwandlern W1 bis Wn jeweils separate Primär- und Sekundärwicklungen vorzusehen, und die Primärwicklungen parallel von dem Schalter 5 takten zu lassen.

An den Sekundärwicklungen der Gleichspannungswandler W1 bis Wn werden jeweils an einer Reihenschaltung aus einer Diode 8 und eines Widerstandes 9 Taktsignale CL1 bis CLn abgenommen, welche in Phase mit dem Taktsignal des Taktgenerators 6 und jeweils den entsprechenden Ausgabestufen A1 bis An zugeführt sind, wo sie zur Umwandlung und seriellen Ausgabe der parallel in die Parallel-Serienwandler eingegebenen Diagnose-Informationen verwendet werden. Diese mit dem Takt der Chopper-Stromversorgung vorgenommene Informationsübertragung erspart die Bereitstellung einer hierfür sonst erforderlichen, besonderen Taktsignalquelle.

Aus der Darstellung gemäß Figur 1 wird deutlich, daß infolge der Optokoppler weder durch die Befehlseingaben B1 bis Bn, noch durch die Rückmeldetelegramme IT1 bis ITn sowie durch die galvanische Trennung der Versorgungsspannungen +U1, -U1 bis +Un, -Un und der Taktsignale CL1 bis CLn keine ungewollte Beeinflussung der zu schaltenden Prozeßstromkreise durch irgendwelche Signale des Steuerungssystems und umgekehrt eintreten kann.

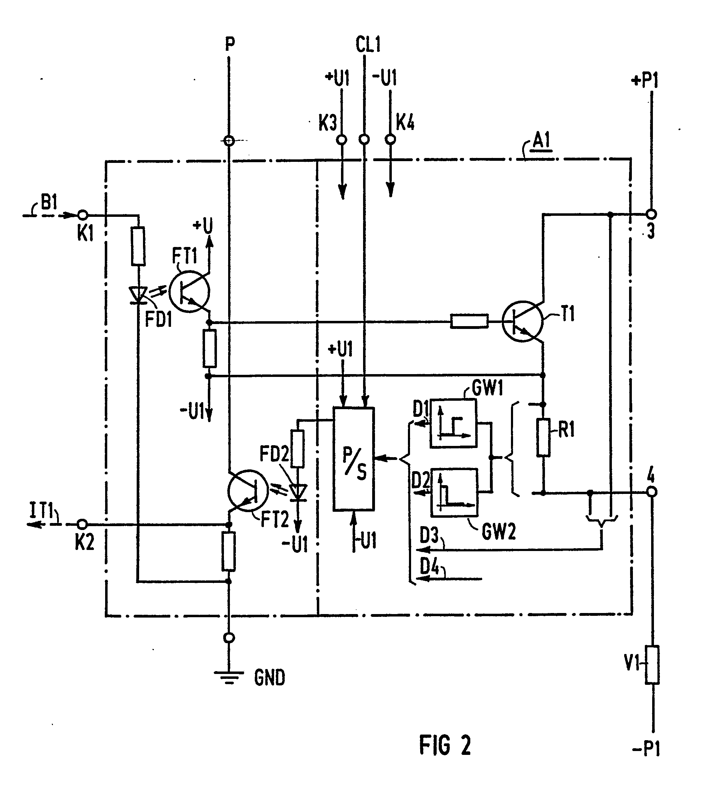

Figur 2, welche am Beispiel der Ausgabestufe A1 nähere Einzelheiten zum inneren Aufbau der Ausgabestufen A1 bis An wiedergibt, zeigt dies noch deutlicher. Im linken Teil der Figur 2 sind die beiden in Figur 1 mit OK bezeichneten Optokoppeleinrichtungen dargestellt, welche jeweils aus einer lichtemittierenden Diode FD1 bzw. FD2 sowie diesen zugeordneten Fototransistoren FT1 bzw. FT2 bestehen. Wenn vom Ausgabecontroller 2 ein auf Schließen des Halbleiterschalters T1 gerichteter Befehl B1 ausgegeben wird, dann nimmt die Eingangsklemme K1 das Betriebspotential P an, was einem H-(High)Signal entspricht, worauf die Fotodiode FD1 leitend wird und den am galvanisch vom Betriebspotential P getrennten Potential +U1 liegenden Fototransistor FT1 durchlässig steuert, womit von dieser separaten Spannungsquelle ein Basisstrom durch den Leistungshalbleiter T1 getrieben wird und diesen durchlässig schaltet, so daß Strom durch den Verbraucher V1 fließen kann. Der zum Durchsteuern des Transistors T1 erforderliche Basisstrom wird völlig unabhängig von den Potentialverhältnissen im Verbraucherstromkreis bewirkt.

Umgekehrt steuert die vom Parallel-Serienwandler impulsweise an die vom Betriebspotential Spannung +U1 gelegte lichtemittierende Diode FD2 den ihr zugeordneten Fototransistor FT2 durchlässig, so daß in entsprechendem Takt an seinem Emitter bzw. der Ausgangsklemme K2 abwechselnd das Betriebspotential P (H-Signal) oder das Bezugspotential GND (L-Signal) erscheint. Die aus den Fotodioden FD1 und FD2 sowie den Fototransistoren FT1 und FT2 bestehende Optokoppeleinrichtung kann mit der Ausgabestufe A1 integriert sein oder, wie gestrichelt angedeutet, auch räumlich von ihr abgesetzt angeordnet werden.

In der Ausgabestufe A1 werden nun eine Reihe von Diagnosesignalen, beispielsweise D1 bis D4, bereitgestellt, welche Aufschluß über den Schaltzustand des Lastkreises geben. So wird an einem in Reihe mit dem Schalttransistor T1 liegenden Shunt-Widerstand R1 eine laststromproportionale Spannung abgenommen und zwei Grenzwertmeldern GW1 und GW2 zugeführt. Der Grenzwertmelder GW1 gibt dann ein H-Signal ab, wenn der Wert des Laststromes einen bestimmten maximalen Wert überschreitet, während der Grenzwertmelder GW2 ein H-Signal abgibt, wenn der Laststrom unter einen bestimmten minimalen Wert fällt. In ähnlicher Weise können mittels Grenzwertmelder oder Komparatoren weitere für den Betriebszustand des Laststromkreises typische Diagnosesignale gewonnen werden, z.B. wie angedeutet, die Spannung über dem Schalttransistor T1. Weiterhin könnte in an sich bekannter Weise mittels eines Temperatursenors erfaßt werden, ob die Temperatur des Schalttransistors einen maximal zulässigen Grenzwert überstiegen hat. Allen diesen zur Bereitstellung der Diagnosesignale verwendeten Sensorbzw. Komparatorelementen werden zur Stromversorgung an den Stromversorgungsklemmen K3 und K4 angeschlossene Spannungen +U1 und -U1 zugeführt, welche unabhängig vom Systembetriebspotential P bzw. den im Prozeß herrschenden Spannungspotentialen sind. Die Diagnosesignale D1 bis D4 werden einem mit P/S bezeichneten Parallel-Serienwandler zugeführt, dem die Aufgabe zukommt, laufend die parallel anliegenden Diagnosesignale seriell und synchron mit dem Taktsignal CL1 an die Optokoppeleinrichtung FD2, FT2 auszugeben.

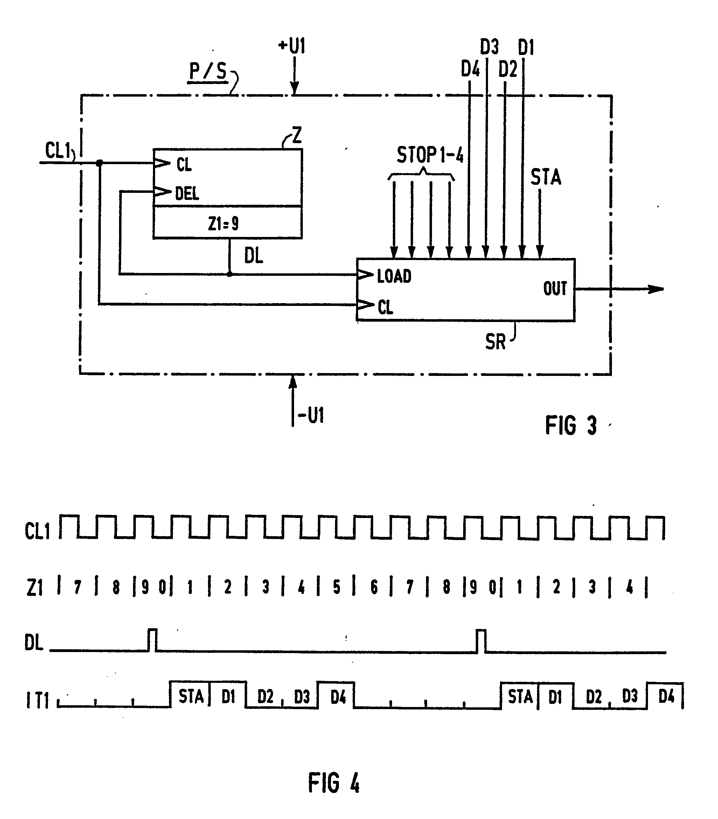

Figur 3 zeigt eine aufwandsarme Realisierung des jeweils in den einzelnen intelligenten Ausgabestufen angeordneten Parallel- Serienwandlers P/S. Bei vier jeweils 1 Bit breiten Diagnosesignalen D1 bis D4 weist er ein Schieberegister SR mit neun Stufen auf, und zwar vier Stufen für einen Satz von vier Diagnosesignalen sowie vier weitere Stufen für sogenannte Stopbits des Impulsdiagramms und eine zusätzliche Stufe für den zum Erkennen des Beginns eines Impulstelegramms verwendeten Startimpuls. Die Stopbits weisen ständig L-Signalpegel auf, das Startimpulsbit immer einen H-Signalpegel, während sich der Pegel der Diagnosebits D1 bis D4 entsprechend dem jeweils vorliegenden Betriebszustand einstellt. Immer wenn an dem mit LOAD bezeichneten Eingang des Schieberegisters SR die ansteigende Flanke eines Impulses DL erscheint, wird der Inhalt der an den Eingängen des Schieberegisters parallel anliegenden Information (Stopbits, D1 bis D4 und Startimpulsbit) in das Schieberegister SR geladen und mit dem nächstfolgenden Impuls des Taktsignals CL1 wird diese Information seriell bitweise ausgelesen, beginnend mit dem Startimpulsbit und endend mit dem letzten Stopbit. Es ist weiterhin ein Zähler Z vorgesehen, welcher mit dem Taktsignal CL1 jeweils vom Stand Null bis auf einen Wert Z1, welcher der Impulstelegrammlänge, im vorliegenden Fall 9, entspricht, hochgezählt und bei Erreichen dieses Zählerstandes jeweils durch Beaufschlagung des Löscheinganges DEL mit dem bei diesem Zählerstand ausgegebenen Impuls DL auf Null zurückgesetzt wird. Da gleichzeitig mit dem Löschen des Zählers Z eine Übernahme der Parallelinformation in das Schieberegister mit anschließenden Ausschieben seines Inhalts am Ausgang OUT erfolgt, werden auf diese Weise laufend die Diagnosesignale D1 bis D4 über die Optokoppeleinrichtung an den Ausgabecontroller 1 seriell übermittelt und können dort in an sich bekannter Weise ausgewertet werden.

Figur 4 zeigt zur Wirkungsweise der in Figur 3 dargestellten Einrichtung gehörige Impulsdiagramme. Man erkennt den Taktimpuls CL1, den jeweiligen Zählerstand Z1 des Zählers Z, den Lösch- und Ladeimpuls DL sowie das Impulsbild des ausgegebenen Impulsdiagramms für eine willkürlich angenommene Kombination der Diagnosesignale D1 bis D4.

## Ansprüche

1. Ausgabeschaltungsanordnung, bestehend aus einzelnen Ausgabestufen, welche von einem programmierbaren Controller betätigbare Leistungs-Halbleiterschalter enthalten, sowie mit Einrichtungen zur Rückmeldung von Diagnosesignalen zum Controller versehen sind, **gekennzeichnet** durch folgende Merkmale:
   a) Die Stromversorgung der Ausgabestufen erfolgt jeweils aus separaten, galvanisch voneinander getrennten Spannungsquellen,
   b) die Betätigungsbefehle (B1 bis Bn) vom Controller für die Halbleiterschalter und die Rückmeldesignale zum Controller werden jeweils über Optokoppler (OK) zu- bzw. abgeführt.

2. Anordnung nach Anspruch 1, **dadurch gekennzeichnet,** daß zur Stromversorgung der Ausgabestufen jeweils hochfrequent getaktete Gleichspannungswandler (W1 bis Wn) vorgesehen sind.

3. Anordnung nach Anspruch 2, **dadurch gekennzeichnet,** daß die Rückmeldung der Diagnosesignale (D1 bis D4) seriell und taktsynchron erfolgt und das Taktsignal (CL1 bis CLn) jeweils an der Sekundärwicklung des der einzelnen Ausgabestufe zugeordneten Gleichspannungswandlers abgenommen wird.

4. Anordnung nach Anspruch 2 oder 3, **dadurch gekennzeichnet,** daß die Primärwicklungen der den einzelnen Ausgabestufen zugeordneten Gleichspannungswandler parallel geschaltet und von einem gemeinsamen Schalter getaktet sind.

5. Anordnung nach Anspruch 2 oder 3, **gekennzeichnet** durch einen Gleichspannungswandler mit einer einzigen Primärwicklung und einer der Anzahl der Ausgabestufen entsprechenden Anzahl von Sekundärwicklungen.

6. Anordnung nach Anspruch 4 oder 5, **dadurch gekennzeichnet,** daß die Ausgangsspannung der Gleichspannungswandler jeweils mittels einer Zenerdiode (7) begrenzt ist.

7. Anordnung nach Anspruch 3, **gekennzeichnet** durch einen in der Ausgabestufe befindlichen Parallel-Serienwandler (P/S), welcher ein taktgesteuertes Schieberegister (SR) enthält, welches in Abhängigkeit vom Zählerstand (Z1) eines mit dem Taktsignal beaufschlagten Zählers (Z) parallel geladen und anschließend seriell ausgelesen wird.

8. Anordnung nach Anspruch 7, **dadurch gekennzeichnet,** daß die parallel in das Schieberegister geladene Information neben den Diagnosesignalbits (D1 bis D4) eine mindestens gleichgroße Anzahl von Stopbits (STOP 1 - 4) sowie ein Startbit (STA) umfaßt.

FIG 1

EP 0 374 293 A1

88 P 3551 E

FIG 2

P/S

+U1          D4  D3  D2  D1

CL1

CL

Z

DEL

Z1 = 9

DL

STOP 1-4

STA

LOAD

OUT

CL

SR

-U1

FIG 3

CL1

Z1 | 7 | 8 | 9 | 0 | 1 | 2 | 3 | 4 | 5 | 6 | 7 | 8 | 9 | 0 | 1 | 2 | 3 | 4 |

DL

IT1 | STA | D1 | D2 | D3 | D4 | STA | D1 | D2 | D3 | D4 |

FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | GB-A-2 159 982 (GENERAL ELECTRIC CO.) * Seite 3, Zeile 55 – Seite 11, Zeile 29; Figuren 3-10 * | 1-8 | G 05 B 19/05 |
| A | WO-A-8 000 381 (SQUARE D COMPANY) * Seite 5, Zeile 4 – Seite 6, Zeile 6; Figuren 7,8 * | 1-8 | |
| A | FR-A-2 547 075 (LA TELEMECANIQUE ELECTRIQUE) * Seite 17, Zeile 13 – Seite 24, Zeile 28; Figuren 4-6 * | 1-8 | |
| A | EP-A-0 278 802 (MERLIN GERIN) * Spalte 4, Zeile 33 – Spalte 5, Zeile 18; Spalte 7, Zeile 40 – Spalte 9, Zeile 64; Spalte 11, Zeile 30 – Spalte 12, Zeile 19; Figuren 1,2,4,6 * | 1-8 | |

**RECHERCHIERTE SACHGEBIETE (Int. Cl.5)**

G 05 B

Der vorliegende Recherchenbericht wurde für alle Patentansprüche erstellt

| Recherchenort | Abschlußdatum der Recherche | Prüfer |
|---|---|---|
| DEN HAAG | 17-08-1989 | HAUSER L.E.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)